# EUROPÄISCHE PATENTANMELDUNG

(11) **EP 1 748 398 A2**
(43) Veröffentlichungstag der Anmeldung: **31.01.2007**
(21) Anmeldenummer: 06015442.4
(22) Anmeldetag: 25.07.2006
(51) Int. Cl.: G07F 7/10, H04L 9/32

(54) **System mit wenigstens einer Rechnerplattform und wenigstens einem Benutzertoken**

(30) Priorität: 27.07.2005 DE 102005033436
(71) Anmelder: Giesecke & Devrient GmbH, 81677 München (DE)
(72) Erfinder: Meister, Gisela, 81737 München (DE); Wacker, Dirk, 81371 München (DE)

(57) **Zusammenfassung**

Die Erfindung betrifft ein System mit wenigstens einer Rechnerplattform (1), die eine Sicherheitseinrichtung (4) zum Speichern geheimer Daten und zur Ausführung kryptographischer Operationen aufweist und mit wenigstens einem Benutzertoken (2), das einem Benutzer zugeordnet ist und über eine Authentisierungsfunktionalität zur Authentisierung der Sicherheitseinrichtung (4) der Rechnerplattform (1) verfügt. Das erfindungsgemäße System zeichnet sich dadurch aus, dass das Benutzertoken (2) eine Ausgabeeinrichtung (7) zur Ausgabe von Informationen an den Benutzer aufweist und die Authentisierungsfunktionalität bei einer erfolgreichen Authentisierung der Sicherheitseinrichtung (4) die Ausgabe einer diesbezüglichen Information über die Ausgabeeinrichtung (7) veranlasst.

## Beschreibung

Die Erfindung betrifft ein System mit wenigstens einer Rechnerplattform und wenigstens einem Benutzertoken. Weiterhin betrifft die Erfindung ein Verfahren zum Betreiben eines derartigen Systems.

Um eine sicherheitsrelevante Anwendung mit Hilfe einer Rechnerplattform abwickeln zu können, ist es erforderlich, dass die Rechnerplattform vertrauenswürdig und vor Manipulationen geschützt ist. Dies kann dadurch erreicht werden, dass die Rechnerplattform mit einem Subsystem ausgestattet wird, das als ein integraler Bestandteil der Rechnerplattform ausgebildet ist und eine zugriffsgeschützte Speicherung von kryptographischen Daten sowie eine Ausführung kryptographischer Verfahren ermöglicht. Ein derartiges Subsystem kann so ausgebildet sein, dass es im wesentlichen aus einem Trusted Platform Module besteht, welches beispielsweise in Form eines Sicherheitschips realisiert ist. Für einen Benutzer ist es allerdings zunächst nicht ersichtlich, ob eine Rechnerplattform, die er benutzen möchte, tatsächlich vertrauenswürdig ist. Um sich hier Gewissheit zu verschaffen, kann ein Authentisierungsverfahren angewendet werden.

Ein Authentisierungsverfahren ist beispielsweise aus der DE 4142 964 A1 bekannt. Die DE 4142 964 A1 offenbart ein Datenaustauschsystem mit einer Vorrichtung, die insbesondere als ein Terminal zur Durchführung von Transaktionen des bargeldlosen Zahlungsverkehrs ausgebildet ist, mit einem Datenträger, der einem Benutzer zugeordnet ist, und mit einer Anzeigeeinheit. Bei diesem System wird die Berechtigung des Benutzers durch die Prüfung eines vom Benutzer eingegebenen persönlichen Merkmals festgestellt. Die Daten des Datenträgers enthalten ein nur dem Benutzer bekanntes Datenwort, das vor der Aufforderung zur Eingabe des persönlichen Merkmals in codierter Form zur Vorrichtung übertragen und nach der Decodierung durch eine in der Vorrichtung enthaltene und die Echtheit der Vorrichtung kennzeichnende kryptographische Einheit dem Benutzer zum Vergleich angezeigt wird. Dadurch wird dem Benutzer die Möglichkeit gegeben, vor der Preisgabe seines persönlichen Merkmals die Echtheit der Vorrichtung auf einfache Weise zu prüfen.

Der Erfindung liegt die Aufgabe zugrunde, einem Benutzer einer Rechnerplattform eine Prüfung der Authentizität einer Sicherheitseinrichtung der Rechnerplattform zu ermöglichen.

Diese Aufgabe wird durch ein System mit der Merkmalskombination des Anspruchs 1 und ein Verfahren gemäß Anspruch 10 gelöst.

Das erfindungsgemäße System weist wenigstens eine Rechnerplattform mit einer Sicherheitseinrichtung zum Speichern geheimer Daten und zur Ausführung kryptographischer Operationen auf. Weiterhin ist wenigstens ein Benutzertoken vorgesehen, das einem Benutzer zugeordnet ist und über eine Authentisierungsfunktionalität zur Authentisierung der Sicherheitseinrichtung der Rechnerplattform verfügt. Das erfindungsgemäße System zeichnet sich dadurch aus, dass das Benutzertoken eine Ausgabeeinrichtung zur Ausgabe von Informationen an den Benutzer aufweist und die Authentisierungsfunktionalität bei einer erfolgreichen Authentisierung der Sicherheitseinrichtung die Ausgabe einer diesbezüglichen Information über die Ausgabeeinrichtung veranlasst.

Die Erfindung hat den Vorteil, dass der Benutzer die Authentizität der Sicherheitseinrichtung der Rechnerplattform zuverlässig und für ihn vertrauenswürdig prüfen kann. Unabhängig davon, welche Rechnerplattform der Benutzer nutzen möchte, kann der Benutzer stets in gleicher Weise über das Ergebnis der Prüfung informiert werden.

Bei einem bevorzugten Ausführungsbeispiel des erfindungsgemäßen Systems werden Informationen bezüglich der Sicherheitseinrichtung und/oder bezüglich der Rechnerplattform an das Benutzertoken übermittelt. Auf diese Weise kann dem Benutzer ein Überblick über den aktuellen Zustand der Sicherheitseinrichtung bzw. der Rechnerplattform verschafft werden. Vorzugsweise werden die Informationen nur im Falle einer erfolgreichen Authentisierung der Sicherheitseinrichtung der Rechnerplattform übermittelt, da die Informationen in der Regel nur dann für den Benutzer von Interesse sind. Weiterhin ist es von Vorteil, wenn die Informationen in kryptographisch abgesicherter Form an das Benutzertoken übermittelt werden. Dadurch können Manipulationen der Informationen verhindert werden und ein Herkunftsnachweis erbracht werden. Die Informationen können über die Ausgabeeinrichtung des Benutzertokens ausgegeben werden und stehen dann dem Benutzer unmittelbar zur Verfügung.

Die Sicherheitseinrichtung der Rechnerplattform ist bevorzugt als ein integraler Bestandteil der Rechnerplattform ausgebildet. Die Rechnerplattform ist beispielsweise als ein Computer, insbesondere als ein Personalcomputer, als ein Mobilfunktelefon oder als eine Chipkarte ausgebildet. Die Ausgabeeinrichtung des Benutzertoken ist vorzugsweise als ein Display ausgebildet. Das Benutzertoken ist beispielsweise als eine Chipkarte, als ein Personal Digital Assistant oder als ein Mobilfunktelefon ausgebildet.

Die Erfindung bezieht sich weiterhin auf ein Verfahren zum Betreiben eines Systems mit wenigstens einer Rechnerplattform, die eine Sicherheitseinrichtung zum Speichern geheimer Daten und zur Ausführung kryptographischer Operationen aufweist und mit wenigstens einem Benutzertoken, das einem Benutzer zugeordnet ist. Vom Benutzertoken wird eine Authentisierung der Sicherheitseinrichtung der Rechnerplattform durchgeführt. Das erfindungsgemäße Verfahren zeichnet sich dadurch aus, dass bei einer erfolgreichen Authentisierung der Sicherheitseinrichtung eine diesbezügliche Information über eine Ausgabeeinrichtung des Benutzertokens an den Benutzer ausgegeben wird.

Die Erfindung wird nachstehend anhand der in der Zeichnung dargestellten Ausführungsbeispiele erläutert.

Es zeigen:
- Fig. 1: eine Prinzipdarstellung eines ersten Ausführungsbeispiels des erfindungsgemäßen Systems,
- Fig. 2: ein Flussdiagramm zur Veranschaulichung eines möglichen Ablaufs im Rahmen der Authentisierung der Sicherheitseinrichtung der Rechnerplattform durch das Benutzertoken und
- Fig. 3: eine Prinzipdarstellung eines zweiten Ausführungsbeispiels des erfindungsgemäßen Systems.

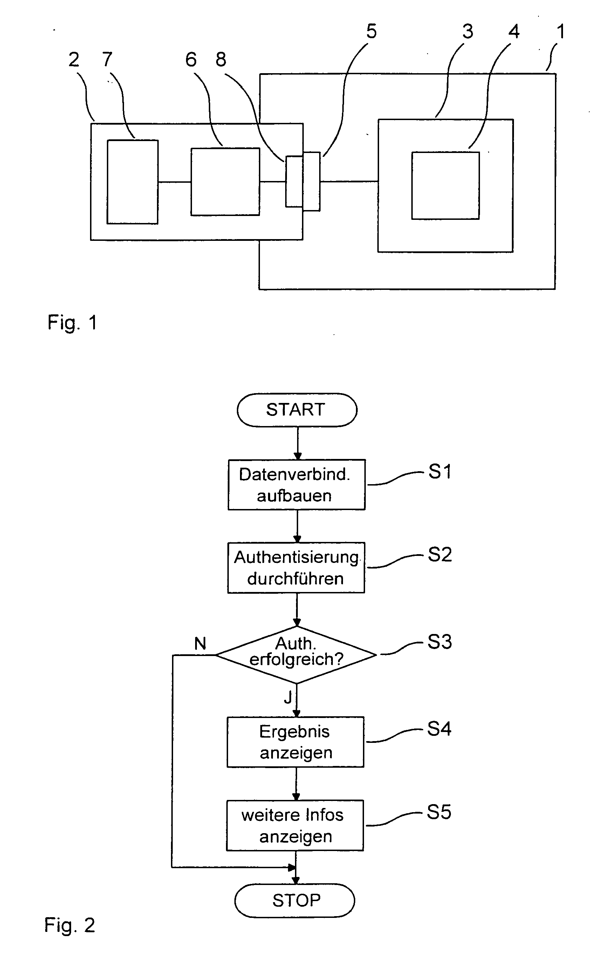

Fig. 1 zeigt eine Prinzipdarstellung eines ersten Ausführungsbeispiels des erfindungsgemäßen Systems. Das System weist eine Rechnerplattform 1 und ein Benutzertoken 2 auf. Beim dargestellten Ausführungsbeispiel ist die Rechnerplattform 1 beispielsweise als ein Mobilfunktelefon oder als ein Computer, insbesondere als ein Personalcomputer oder ein Laptop, ausgebildet und weist eine Elektronik 3 auf. Die Elektronik 3 enthält als einen integralen Bestandteil eine Sicherheitseinrichtung 4, die beispielsweise als ein Sicherheitsschaltkreis oder als ein Teil eines sonstigen Schaltkreises der Elektronik 3 ausgebildet ist. In der Sicherheitseinrichtung 4 sind kryptographische Daten zugriffsgeschützt gespeichert. Außerdem ist die Sicherheitseinrichtung 4 in der Lage, kryptographische Operationen auszuführen. Eine derartige Sicherheitseinrichtung 4 einer Rechnerplattform 1 wird auch als Trusted Plattform Module, abgekürzt TPM, bezeichnet und kann beispielsweise dazu verwendet werden, die Rechnerplattform 1 als vertrauenswürdig auszuweisen. Weiterhin weist die Rechnerplattform 1 eine Kontaktiereinheit 5 auf, die mit der Elektronik 3 verbunden ist.

Das Benutzertoken 2 ist beispielsweise als eine Chipkarte, als ein Personal Digital Assistant (PDA) oder als ein Mobilfunktelefon ausgebildet und weist einen integrierten Schaltkreis 6, ein Display 7 und ein Kontaktfeld 8 auf. Das Display 7 und das Kontaktfeld 8 sind jeweils mit dem integrierten Schaltkreis 6 verbunden. Zu dem in Fig. 1 dargestellten Zeitpunkt ist das Kontaktfeld 8 des Benutzertokens 2 durch die Kontaktiereinheit 5 der Rechnerplattform 1 kontaktiert und dadurch eine Datenverbindung zwischen dem integrierten Schaltkreis 6 des Benutzertokens 2 und der Elektronik 3 und insbesondere auch der Sicherheitseinrichtung 4 der Rechnerplattform 1 ausgebildet. Eine solche Datenverbindung zwischen dem Benutzertoken 2 und der Rechnerplattform 1 kann beispielsweise auch über USB-Schnittstellen (Universal Serial Bus) oder kontaktlos, insbesondere mittels NFC-Schnittstellen (Near Field Communication) ausgebildet werden, wenn die Rechnerplattform 1 und das Benutzertoken 2 derartige Schnittstellen aufweisen.

Wenn die Rechnerplattform 1 zur Durchführung einer sicherheitsrelevanten Anwendung genutzt werden soll, wird im Rahmen der Erfindung eine Authentisierung der Sicherheitseinrichtung 4 der Rechnerplattform 1 durch das Benutzertoken 2 durchgeführt. Die diesbezügliche Vorgehensweise wird anhand von Fig. 2 erläutert.

Fig. 2 zeigt ein Flussdiagramm zur Veranschaulichung eines möglichen Ablaufs im Rahmen der Authentisierung der Sicherheitseinrichtung 4 der Rechnerplattform 1 durch das Benutzertoken 2. Der Durchlauf des Flussdiagramms beginnt mit einem Schritt S1, in dem eine Datenverbindung zwischen dem Benutzertoken 2 und der Rechnerplattform 1 ausgebildet wird. Hierzu wird das Kontaktfeld 8 des Benutzertokens 2 von der Kontaktiereinheit 5 der Rechnerplattform 1 berührend kontaktiert. Auf Schritt S1 folgt ein Schritt S2, in dem eine Authentisierung der Sicherheitseinrichtung 4 der Rechnerplattform 1 gegenüber dem Benutzertoken 2 durchgeführt wird. Die Authentisierung kann beispielsweise auf Basis eines gemeinsamen Geheimnisses erfolgen, das zur Verschlüsselung von Daten verwendet wird. Derartige Authentisierungsverfahren sind für sich genommen bekannt und werden deshalb nicht näher beschrieben.

Im Anschluss an Schritt S2 wird ein Schritt S3 durchgeführt, in dem abgefragt wird, ob die Authentisierung erfolgreich abgelaufen ist. Ist dies nicht der Fall, so ist der Durchlauf des Flussdiagramms beendet. Andernfalls, d. h. bei einer erfolgreichen Authentisierung, wird als nächstes ein Schritt S4 ausgeführt, in dem auf dem Display 7 des Benutzertokens 2 angezeigt wird, dass die Authentisierung erfolgreich war. Je nach Ausbildung des Benutzertokens 2 kann das Ergebnis der Authentisierung auch auf andere Weise durch das Benutzertoken 2 an den Benutzer ausgegeben werden. Beispielsweise kann die Ausgabe auch akustisch erfolgen. Wichtig ist dabei allerdings, dass die Ausgabe jeweils durch das Benutzertoken 2 selbst und nicht über die Rechnerplattform 1 erfolgt, da nur dann für den Benutzer gewährleistet ist, dass die Ausgabe nicht manipuliert ist. Dabei kann der beschriebene Ablauf auch so abgewandelt werden, dass auch bei einer fehlgeschlagenen Authentisierung eine Ausgabe an den Benutzer erfolgt, allerdings mit dementsprechend anderen Inhalt.

Auf Schritt S4 folgt ein Schritt S5, in dem von der Rechnerplattform 1 weitere Daten an das Benutzertoken 2 übermittelt werden und dem Benutzer am Display 7 des Benutzertokens 2 angezeigt werden. Bei diesen weiteren Daten kann es sich beispielsweise um Konfigurationsdaten der Sicherheitseinrichtung 4 oder der Rechnerplattform 1, um Daten zur Durchführung eines einmaligen Einloggens in die Rechnerplattform 1 usw. handeln. Um Manipulationen der übertragenen Daten zu verhindern und/oder deren Herkunft nachzuweisen, können die Daten kryptographisch abgesichert werden. Insbesondere kann ein sicherer Übertragungskanal zwischen dem Benutzertoken 2 und der Sicherheitseinrichtung 4 der Rechnerplattform 1 ausgebildet werden. Eine derart abgesicherte Datenübertragung wird auch als Secure Messaging bezeichnet. Zur weiteren Erhöhung der Sicherheit kann es vor oder während der Ausführung des Schrittes S5 vorgesehen sein, dass sich der Benutzertoken 2 gegenüber der Sicherheitseinrichtung 4 authentisiert.

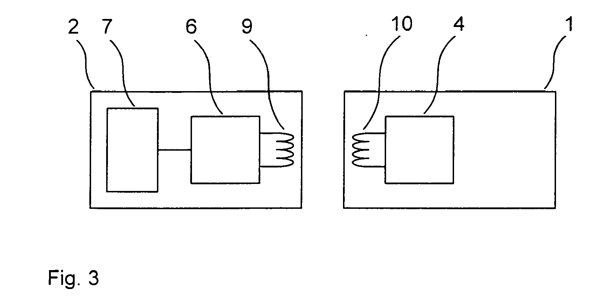

Fig. 3 zeigt eine Prinzipdarstellung eines zweiten Ausführungsbeispiels des erfindungsgemäßen Systems. Beim zweiten Ausführungsbeispiel wird ein Benutzertoken 2 eingesetzt, das für eine kontaktlose Datenübertragung vorgesehen ist. Als Rechnerplattform 1 wird eine kontaktlose Chipkarte eingesetzt. Die kontaktlose Datenübertragung kann gemäß einem Standard für kontaktlose Chipkarten erfolgen. Ebenso ist es auch möglich, das Benutzertoken 2 und die Rechnerplattform 1 mit NFC-Bausteinen auszustatten und eine kontaktlose Datenübertragung mit Hilfe der NFC-Bausteine durchzuführen.

Zur Durchführung der kontaktlosen Datenübertragung weist das Benutzertoken 2 anstelle des beim ersten Ausführungsbeispiel vorgesehenen Kontaktfelds 8 eine Antenne 9 auf, die am integrierten Schaltkreis 6 angeschlossen ist. Der integrierte Schaltkreis 6 ist gegenüber dem ersten Ausführungsbeispiel so abgewandelt, dass er in der Lage ist, kontaktlos über die Antenne 9 zu kommunizieren. Ansonsten entspricht das Benutzertoken 2 in Aufbau und Funktionsweise dem ersten Ausführungsbeispiel.

Die Rechnerplattform 1 weist lediglich die Sicherheitseinrichtung 4 und eine daran angeschlossene Antenne 10 auf. Die Sicherheitseinrichtung 4 ist als ein Chip ausgebildet, der sämtliche Funktionalitäten der als kontaktlose Chipkarte ausgebildeten Rechnerplattform 1 beinhaltet. Die beim ersten Ausführungsbeispiel vorgesehene Elektronik 3 ist daher nicht erforderlich.

Die Authentisierung der Sicherheitseinrichtung 4 der Rechnerplattform 1 wird in analoger Weise durchgeführt, wie in Fig. 2 dargestellt. Allerdings wird die Datenverbindung zwischen dem Benutzertoken 2 und der Rechnerplattform 1 nicht durch eine berührende Kontaktierung eines Kontaktfeldes 8 des Benutzertokens 2, sondern kontaktlos über die Antenne 9 des Benutzertokens 2 und die Antenne 10 der Rechnerplattform 1 durchgeführt.

## Patentansprüche

1. System mit wenigstens einer Rechnerplattform (1), die eine Sicherheitseinrichtung (4) zum Speichern geheimer Daten und zur Ausführung kryptographischer Operationen aufweist und mit wenigstens einem Benutzertoken (2), das einem Benutzer zugeordnet ist und über eine Authentisierungsfunktionalität zur Authentisierung der Sicherheitseinrichtung (4) der Rechnerplattform (1) verfügt, **dadurch gekennzeichnet, dass** das Benutzertoken (2) eine Ausgabeeinrichtung (7) zur Ausgabe von Informationen an den Benutzer aufweist und die Authentisierungsfunktionalität bei einer erfolgreichen Authentisierung der Sicherheitseinrichtung (4) die Ausgabe einer diesbezüglichen Information über die Ausgabeeinrichtung (7) veranlasst.

2. System nach Anspruch 1, **dadurch gekennzeichnet, dass** Informationen bezüglich der Sicherheitseinrichtung (4) und/oder bezüglich der Rechnerplattform (1) an das Benutzertoken (2) übermittelt werden.

3. System nach Anspruch 2, die Informationen nur im Falle einer erfolgreichen Authentisierung der Sicherheitseinrichtung (4) der Rechnerplattform (1) übermittelt werden.

4. System nach einem der Ansprüche 1 bis 3, **dadurch gekennzeichnet, dass** die Informationen an das Benutzertoken (2) nur nach erfolgreicher Authentisierung des Benutzertokens (2) übermittelt werden.

5. System nach einem der Ansprüche 2 bis 4, **dadurch gekennzeichnet, dass** die Informationen in kryptographisch abgesicherter Form an das Benutzertoken (2) übermittelt werden.

6. System nach einem der Ansprüche 2 bis 5, **dadurch gekennzeichnet, dass** die Informationen über die Ausgabeeinrichtung (7) des Benutzertokens (2) ausgegeben werden.

7. System nach einem der vorhergehenden Ansprüche, **dadurch gekennzeichnet, dass** die Sicherheitseinrichtung (4) der Rechnerplattform (1) als ein integraler Bestandteil der Rechnerplattform (1) ausgebildet ist.

8. System nach einem der vorhergehenden Ansprüche, **dadurch gekennzeichnet, dass** die Rechnerplattform (1) als ein Computer, insbesondere als ein Personalcomputer, als ein Mobilfunktelefon oder als eine Chipkarte ausgebildet ist.

9. System nach einem der vorhergehenden Ansprüche, **dadurch gekennzeichnet, dass** die Ausgabeeinrichtung (7) des Benutzertokens (2) als ein Display ausgebildet ist.

10. System nach einem der vorhergehenden Ansprüche, **dadurch gekennzeichnet, dass** das Benutzertoken (2) als eine Chipkarte, als ein Personal Digital Assistant oder als ein Mobilfunktelefon ausgebildet ist.

11. Verfahren zum Betreiben eines Systems mit wenigstens einer Rechnerplattform (1), die eine Sicherheitseinrichtung (4) zum Speichern geheimer Daten und zur Ausführung kryptographischer Operationen aufweist und mit wenigstens einem Benutzertoken (2), das einem Benutzer zugeordnet ist, wobei vom Benutzertoken (2) eine Authentisierung der Sicherheitseinrichtung (4) der Rechnerplattform (1) durchgeführt wird, **dadurch gekennzeichnet, dass** bei einer erfolgreichen Authentisierung der Sicherheitseinrichtung (4) eine diesbezügliche Information über eine Ausgabeeinrichtung (7) des Benutzertokens (2) ausgegeben wird.
